# FASCICULE DE BREVET EUROPEEN

(11) **EP 0 768 284 B1**
(45) Date de publication et mention de la délivrance du brevet: **16.05.2001**
(21) Numéro de dépôt: 96120971.5
(22) Date de dépôt: 02.10.1992
(51) Int. Cl.: C03C 3/087, C03C 4/02, B60J 1/00

(54) **Garniture de vitrages montés sur un véhicule automobile**
Auf einen Kraftfahrzeug aufgesetzte Verglasungsgarnitur
Glazing set mounted on an automotive vehicle

(30) Priorité: 03.10.1991 FR 9112164
(43) Date de publication de la demande: 16.04.1997
(62) Demande divisionnaire de: 92402685.9
(73) Titulaire: SAINT-GOBAIN GLASS FRANCE, 92400 Courbevoie (FR)
(72) Inventeur: Alvarez-Casariego, Pédro, 33400 Salinas (ES)
(74) Mandataire: Breton, Jean-Claude

(56) Documents cités:
- EP-A- 0 349 909
- EP-A- 0 482 535
- FR-A- 2 074 983
- GB-A- 1 168 769
- GB-A- 1 331 492
- GB-A- 2 162 835
- US-A- 3 296 004
- US-A- 4 104 076
- US-A- 4 190 452
- US-A- 4 866 010
- PATENT ABSTRACTS OF JAPAN vol. 006, no. 197 (C-128), 6 octobre 1982 & JP 57 106537 A (NIPPON SHEET GLASS CO LTD), 2 juillet 1982,

## Description

La présente invention se rapporte à une composition de verre coloré destiné à la fabrication d'un vitrage susceptible, notamment, d'être monté sur un véhicule automobile. Elle vise plus particulièrement une composition de verre permettant de réaliser un vitrage susceptible de former les glaces latérales arrières et les lunettes arrières d'un véhicule automobile.

Les constructeurs d'automobiles proposent des vitrages colorés à leurs clients, non seulement dans un souci d'ordre esthétique mais aussi pour le rôle fonctionnel qu'ils peuvent remplir, à savoir, notamment l'amélioration de la visibilité dans des conditions critiques d'éclairement, et/ou le confort des passagers.

Sous ce dernier aspect, la proportion de surface vitrée progressant chaque année sur les nouveaux modèles, l'effet de serre constitue désormais un facteur important à prendre en compte dans la climatisation du véhicule. L'une des voies visant à réduire ledit effet réside dans la mise au point de vitrages de transmission faible pour les rayonnements du proche infra-rouge, mais dont la transmission pour le spectre du visible, bien qu'inférieure à celle des pare-brise classiques, soit encore acceptable pour les passagers.

Le brevet US-A-4 104 076 propose des verres à base d'oxydes de fer, de cobalt, de chrome et/ou d'uranium et contenant éventuellement du sélénium. Ces verres se classent en deux catégories : les verres bronze qui présentent un facteur de transmission lumineuse entre 40 et 55 %, les verres gris pour lesquels ce facteur est compris entre 35 et 45 %. Ces verres; plus particulièrement destinés à la réalisation de vitrages pour le bâtiment, présentent un facteur de transmission énergétique globate classique inférieur à 50 % pour une épaisseur de 6,2 mm.

La demande de brevet EP-A-0 349 909 proposent des verres de teinte grise à base d'oxydes de fer et de cobalt auxquels on ajoute au moins 30 ppm de sélénium. Ces verres se caractérisent, pour une épaisseur de 5,56 mm, par un facteur de transmission lumineuse compris entre 5 et 20 % et un facteur de transmission énergétique globale inférieur à 40 %. Tous les verres donnés à titre d'exemples présentent un facteur de transmission énergétique supérieur au facteur de transmission lumineuse.

La demande de brevet EP-A-0 349 909 propose des verres de teinte grise à base d'oxydes de fer et de cobalt auxquels on ajoute au moins 30 ppm de sélénium. Ces verres se caractérisent, pour une épaisseur de 5.56 mm, par un facteur de transmission lumineuse compris entre 5 et 20% et un facteur de transmission énergétique globale inférieur à 40%. Tous les verres donnés à titre d'exemples présentent un facteur de transmission énergétique supérieur au facteur de transmission lumineuse.

La demande de brevet EP-A 0 482 535 propose des verres de teinte foncée particulièrement adaptés pour la réalisation de toit de véhicule automobile. Les oxydes de fer et de cobalt accompagnés de sélénium colorent ces verres qui se caractérisent par une faible transmission lumineuse (égale ou inférieure à 32%) et une très faible transmission énergétique (inférieure à 15%) sous une épaisseur de 3.9 mm.

Le brevet US.A 4 190 452 divulgue des verres bronzes neutres dont la coloration est provoquée par des oxydes de fer et de cobalt, par du sélénium et, éventuellement, par des oxydes de nickel et de chrome. Ces verres se caractérisent par une transmission lumineuse supérieure à 70% sous une épaisseur de 3 mm, une pureté d'excitation comprise entre 2 et 6% et une longueur d'onde dominante variant entre 570 et 580 nm.

Le brevet US-A 4 866 010 décrit des verres utilisables aussi bien dans le bâtiment que dans l'industrie automobile. Il s'agit de verres bleus dont la coloration est obtenue au moyen des oxydes de fer et de cobalt et par du sélénium. Sous une épaisseur de 6.35 mm ils possèdent une transmission lumineuse de l'ordre de 54%.

Le brevet FR.A 2 074 983 décrit des verres de couleur grise dont les agent de coloration sont également des oxydes de fer et de cobalt accompagnés de sélénium. Ces verres, qui possèdent une faible pureté d'excitation (inférieure à 1.5%), ont, sous une épaisseur de 5 mm, une transmission lumineuse et une transmission énergétique comprise entre 57 et 63%.

Le brevet US.A 3 296 004 décrit des verres bronzes neutres plus particulièrement destinés au bâtiment. Sous une épaisseur de 6.35 mm, ils possèdent une transmission lumineuse comprise entre 48 et 56% et une transmission énergétique inférieure à 50%. La coloration de ces verres est due à la présence de sélénium et d'oxyde de fer et de cobalt.

La présente invention se propose de fournir une garniture de vitrages montés sur un véhicule automobile, comprenant un pare-brise, des latéraux avants et arrières et une lunette arrière, dans lequelle les vitrages des latéraux arrières et de la lunette sont réalisés à partir de verres colorés dans la masse qui présentent, pour une épaisseur déterminée, une transmission lumineuse globale modérée et une transmission énergétique globale correspondante inférieure.

L'invention se propose également de fournir une garniture de vitrages dans laquelle les vitrages des latéraux arrières et de la lunette sont réalisés à partir de verres colorés de compositions différentes.

D'après l'invention, ces buts sont atteints grâce à une garniture de vitrages selon la revendication 1.

Les compositions formant ces vitrages peuvent contenir d'autres constituants en très faibles quantités, provenant de composés ajoutés au mélange vitrifiable pour faciliter l'affinage du verre. C'est le cas, par exemple, de SO₃ provenant de la décomposition de sulfate ajouté au mélange.

Les verres formant ces vitrages peuvent être élaborés dans des fours classiques et transformés en ruban continu par la technique bien connue du verre flotté sur bain d'étain.

Les verres formant ces vitrages présentent une pureté d'excitation sous illuminant C peu élevée. Elle est généralement inférieure à 15 % et le plus souvent inférieure à 12%.

Les caractéristiques de transmission de verres formant ces vitrages ainsi que leur longueur d'onde dominante sous illuminant C sont régies par leur état d'oxydo-réduction. Selon la présente invention 16 à 55 % du fer total, exprimé sous forme de Fe₂O₃ peut être sous forme d'oxyde ferreux. Plus généralement, 20 à 40 % du fer total est sous la forme d'oxyde ferreux.

Les verres formant ces vitrages présentent des teintes grises et des colorations plus ou moins neutres, susceptibles de varier du bleu/vert au vert/jaune en passant par toutes les nuances intermédiaires, correspondant à des longueurs d'onde dominantes sous illuminant C comprises entre 490 et 560 nm.

Les verres formant ces vitrages présentent les caractéristiques de transmission désirées en utilisant comme agents colorants les oxydes de fer et de cobalt, en ajoutant, de l'oxyde de chrome et éventuellement du sélénium, ce dernier ayant pour effet de diminuer la pureté d'excitation.

Les verres formant ces vitrages peuvent comprendre une partie seulement de ces agents colorants ou la totalité de ces agents dans des proportions dûment choisies en fonction des caractéristiques recherchées.

Ainsi les verres formant ces vitrages peuvent comprendre comme agents colorants les oxydes de fer et de cobalt et, éventuellement, du sélénium. Les teneurs pondérales des agents colorants des verres préférés de l'invention appartenant à cette famille peuvent varier en fonction des propriétés recherchées.

Des verres présentant une teinte grise et se caractérisant par un facteur de transmission lumineuse élevé (TL_{A} > 40%) comprennent les agents colorants suivants dans les limites pondérales ainsi définies :

| | **(I)** |
|---|---|
| Fe₂O₃ (fer total) | 0,45 à 1 % |
| CoO | 0,001 à 0,01 % |
| Se | 0,0002 à 0,002 % |

Des verres présentant également une teinte grise mais se caractérisant par un facteur de transmission lumineuse plus faible (TL_{A} < 40%) et un facteur T_{E} nettement inférieur à celui des verres (i) comprennent les agents colorants suivants dans les limites pondérales définies comme suit :

| | **(II)** |
|---|---|
| Fe₂O₃ (fer total) | 1 à 1,8 % |
| CoO | 0,005 à 0,02 % |
| Se | 0,0005 à 0,0025 % |

Parmi les verres appartenant à cette famille mais qui éventuellement ne contiennent pas de sélénium, on peut distinguer des verres qui présentent un facteur TL_{A} élevé (> 40%) et un facteur T_{E} relativement faible. De tels verres comprennent les agents colorants ci-après définis dans les limites pondérales suivantes :

| | **(III)** |
|---|---|
| Fe₂O₃ (fer total) | 0,8 à 1,8 % |
| CoO | 0,001 à 0,01 % |

Toujours dans la catégorie des verres ne contenant éventuellement pas de sélénium, on peut également définir des verres qui présentent un facteur TL_{A} et un facteur T_{E} nettement inférieurs à ceux des verres précédentes (III). Ces verres comprennent une teneur élevée en oxydes de fer associés à l'oxyde de cobalt dans les proportions pondérales suivantes :

| | **(IV)** |
|---|---|
| Fe ₂ O ₃ (fer total) | 1?3 à 2?5 % |
| CoO | 0,005 à 0,015 % |

Les verres (III) et (IV) peuvent bien évidemment comprendre du sélénium, dans les limites générales précédemment définies.

Pour préparer les verres de l'invention, on utilise comme composition de base une composition de verre traditionnelle dans l'industrie du verre plat, dans laquelle on ajoute les agents colorants suivant des proportions qui permettent, pour une épaisseur déterminée, d'obtenir les caractéristiques optiques et l'apparence recherchées. Le verre de base choisi a la composition pondérale suivante :

| | |
|---|---|
| SiO₂ | 72,1 % |
| Al₂O₃ | 0,74 % |
| CaO | 8,90 % |
| MgO | 3,79 % |
| Na₂O | 14,16 % |
| K₂O | 0,11 % |
| SO₃ | 0,20 % |

Les agents colorants sont ajoutés dans ce verre au détriment de la silice.

Le tableau en annexe présente une série d'exemples de compositions de verre illustrant l'invention. Les teneurs en agents colorants sont exprimées en pourcentages pondéraux. Les valeurs des différentes caractéristiques de ces verres ont été mesurées sur des vitrages de 3,85 millimètres d'épaisseur. Le niveau de pureté atteint par certains verres selon l'invention est remarquable eu égard à la très faible teneur en sélénium de ces verres. Pour la totalité des verres selon l'invention le rapport Fe₂O₃ (total)/Se est supérieur à 200.

Comme indiqué précédemment, les verres selon l'invention peuvent être transformés en ruban continu par la technique du verre flotté. Les feuilles de verre obtenues par découpe de ce ruban présentent des épaisseurs variant entre environ 2 et 8 mm. Ces feuilles de verre peuvent être utilisées seules ou associées à une feuille de verre non coloré pour réaliser des vitrages susceptibles d'être montés sur un véhicule automobile au niveau des latéraux arrières et de la lunette arrière.

Ces vitrages peuvent être montés en les associant dans une garniture avec d'autres vitrages qui forment le pare-brise et les latéraux avant. C'est ainsi qu'une garniture de véhicule automobile peut être constituée de vitrages dont le facteur de transmission lumineuse globale sous illuminant A, pour une épaisseur déterminée, diminuera en passant du pare-brise à la lunette arrière.

Les vitrages obtenus à partir des verres selon l'invention peuvent être avantageusement utilisés dans le cadre d'une telle garniture pour véhicule automobile.

Ainsi les vitrages des latéraux arrières, qu'il s'agisse de latéraux mobiles ou fixes appelés custodes, pourront être réalisés à partir de verres qui, pour une épaisseur de 3,85 mm, présentent un facteur de transmission lumineuse globale sous illuminant A compris entre environ 30 et 60 %. Ils pourront être associés à des lunettes arrières réalisées à partir de verres qui, pour une épaisseur identique, présentent un facteur de transmission lumineuse globale sous illuminant A comprise entre environ 20 et 45 %.

Une garniture de ce genre pourrait être réalisée à partir des verres références Ex. 5 et Ex. 2 dans le tableau en annexe. Les vitrages formés du verre Ex. 5 serviraient de latéraux arrières, le vitrage formé du verre Ex. 2 constituerait la lunette arrière.

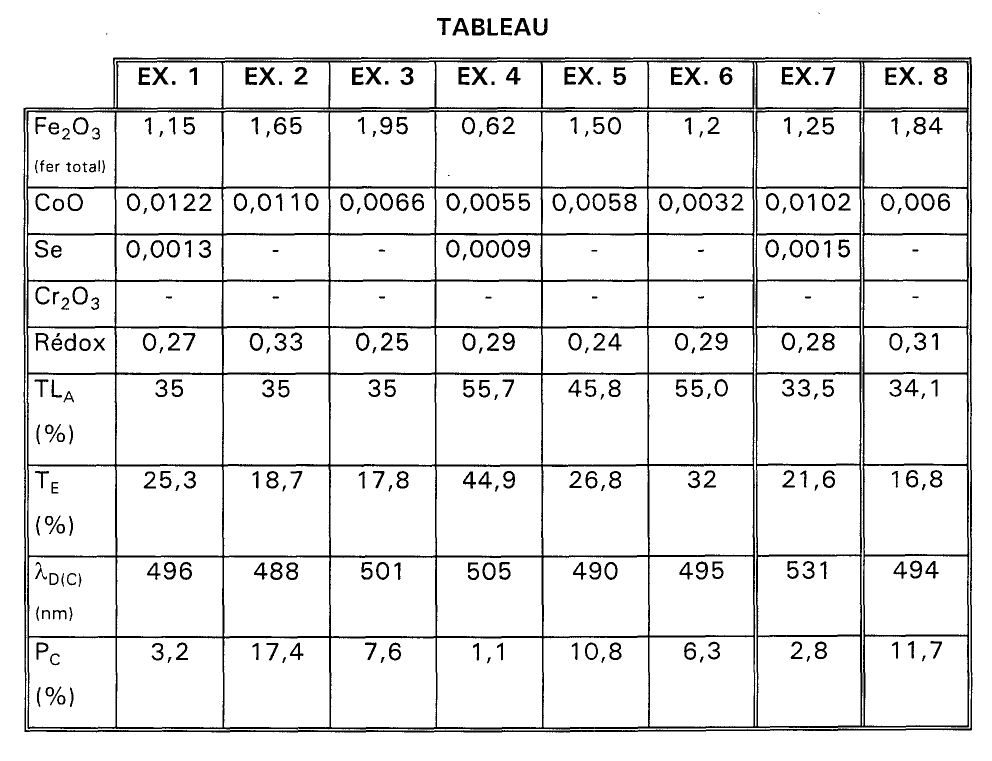

## Revendications

1. Garniture de vitrages montés sur un véhicule automobile comprenant un pare-brise, des latéraux avants et arrières et une lunette arrière, **caractérisée en ce que** les latéraux arrières et la lunette arrière sont constitués par des vitrages, qui, pour une épaisseur déterminée, présente des facteurs de transmission lumineuse globale sous illuminant A différents, lesdits vitrages comprenant une feuille de verre coloré dont la composition comprend les constituants ci-après dans les limites ci-après, exprimées en pourcentages pondéraux :
| | |
|---|---|
| SiO₂ | 64 à 75 % |
| Al₂O₃ | 0 à 5 % |
| B₂O₃ | 0 à 5 % |
| CaO | 5 à 15 % |
| MgO | 0 à 5 % |
| Na₂O | 10 à 18 % |
| K₂O | 0 à 5 % |
et, à titre d'agents colorants :
| | |
|---|---|
| Fe₂O₃ (fer total) | 0,45 à 2,5 % |
| CoO | 0,001 à 0,02 % |
| Cr₂O₃ | 0 à 0,1 % |
| Se | 0 à 0,0025 % |
cette composition de verre ayant un facteur de transmission énergétique globale (T_{E}) inférieur au facteur de transmission lumineuse sous illuminant A (T_{LA}), le facteur T_{E} étant compris entre 10 et 48 % et le facteur T_{LA} entre 20-et 60 % pour une épaisseur de 3,85 millimètres, hormis la garniture dont les latéraux arrières et la lunette arrière sont constitués par des vitrages comprenant une feuille de verre coloré dont la composition comprend les constituants suivants dans les limites ci-après, exprimés en pourcentages pondéraux :
| | |
|---|---|
| SiO₂ | 64 à 75% |
| Al₂O₃ | 0 à 5% |
| B₂O₃ | 0 à 5% |
| CaO | 5 à 15% |
| MgO | 0 à 5% |
| Na₂O | 10 à 18% |
| K₂O | 0 à 5% |
| Fe₂O₃ (fer total) | 0.5 à 1.5% |
| CoO | 0.003 à 0.015% |
| Cr₂O₃ | 0.025 à 0.09% |
| Se | 0 à 0.0025% |

2. Garniture selon la revendication 1, **caractérisée en ce que** les vitrages comprennent une feuille de verre coloré dont la composition contient une teneur en FeO qui représente entre 16 et 55 % de la teneur en fer total exprimée sous forme de Fe₂O₃.

3. Garniture selon la revendication 2, **caractérisée en ce que** les vitrages comprennent une feuille de verre coloré dont la composition contient une teneur en FeO qui représente entre 20 et 40 % de la teneur en fer total exprimée sous forme de Fe₂O₃.

4. Garniture selon l'une des revendications 1 et 2, **caractérisée en ce que** les vitrages comprennent une feuille de verre coloré dont la composition contient à titre d'agents colorants:
| | |
|---|---|
| Fe₂O₃ (fer total) | 0,45 à 1 % |
| CoO | 0,001 à 0,01 % |
| Se | 0,0002 à 0,002 % |

5. Garniture selon l'une des revendications 1 et 2, **caractérisée en ce que** les vitrages comprennent une feuille de verre coloré dont la composition contient à titre d'agents colorants:
| | |
|---|---|
| Fe₂O₃ (fer total) | 1 à 1,8 % |
| CoO | 0,005 à 0,02 % |
| Se | 0,0005 à 0,0025 % |

6. Garniture selon l'une des revendications 1 et 2, **caractérisée en ce que** les vitrages comprennent une feuille de verre coloré dont la composition contient à titre d'agents colorants:
| | |
|---|---|
| Fe₂O₃ (fer total) | 0,8 à 1,8 % |
| CoO | 0,001 à 0,01 % |

7. Garniture selon l'une des revendications 1 et 2, **caractérisée en ce que** les vitrages comprennent une feuille de verre coloré dont la composition contient à titre d'agents colorants:
| | |
|---|---|
| Fe₂O₃ (fer total) | 1,3 à 2,5 % |
| CoO | 0,005 à 0,015 % |

8. Garniture selon l'une quelconque des revendications précédentes, **caractérisée en ce que** les vitrages comprennent une feuille de verre coloré dont l'épaisseur est comprise entre 2 et 8 millimètres.

9. Garniture selon l'une quelconque des revendications précédentes, **caractérisée en ce que** les vitrages formant les latéraux arrières présentent, pour une épaisseur de 3,85 mm, un facteur de transmission globale sous illuminant A compris entre 30 et 60%, le vitrage constituant la lunette arrière présentant, pour la même épaisseur, un facteur de transmission globale sous illumiant A compris entre 20 et 45%.

## Claims

1. Fitting for glazings installed on a car comprising a windscreen, front and rear side windows and a rear window, characterized in that the rear side windows and rear window are constituted by glazings which, for a given thickness, have different global light transmission factors under illuminant A, said glazings comprising a coloured glass sheet, whose composition incorporates the following constituents in the following limits, expressed as percentages by weight:
| | |
|---|---|
| SiO₂ | 64 to 75% |
| Al₂O₃ | 0 to 5% |
| B₂O₃ | 0 to 5% |
| CaO | 5 to 15% |
| MgO | 0 to 5% |
| Na₂O | 10 to 18% |
| K₂O | 0 to 5% |
and as colouring agents:
| | |
|---|---|
| Fe₂O₃ (total iron) | 0.45 to 2.5% |
| CoO | 0.001 to 0.02% |
| Cr₂O₃ | 0 to 0.1% |
| Se | 0 to 0.0025% |
said glass transmission having a global energy transmission factor (TE) lower than the light transmission factor under illuminant A (TLA), the factor TE being between 10 and 4% and the factor TLA between 20 and 60% for a thickness of 3.85 millimetres excepting the fitting, whose rear side windows and rear window are constituted by glazings comprising a coloured glass sheet, whose composition comprises the following constituents in the following limits, expressed as percentages by weight:
| | |
|---|---|
| SiO₂ | 64 to 75% |
| Al₂O₃ | 0 to 5% |
| B₂O₃ | 0 to 5% |
| CaO | 5 to 15% |
| MgO | 0 to 5% |
| Na₂O | 10 to 18% |
| K₂O | 0 to 5% |
| Fe₂O₃ (total iron) | 0.5 to 1.5% |
| CoO | 0.003 to 0.015% |
| Cr₂O₃ | 0.025 to 0.09% |
| Se | 0 to 0.0025% |

2. Fitting according to claim 1, characterized in that the glazings comprise a coloured glass sheet, whose composition contains a FeO content representing between 16 and 55% of the total iron content, expressed in the form Fe₂O₃.

3. Fitting according to claim 2, characterized in that the glazings comprise a coloured glass sheet, whose composition contains a FeO content representing between 20 and 40% of the total iron content expressed in the form Fe₂O₃.

4. Fitting according to one of the claims 1 and 2, characterized in that the glazings comprise a coloured glass sheet, whose composition contains as colouring agents:
| | |
|---|---|
| Fe₂O₃ (total iron) | 0.45 to 1% |
| CoO | 0.001 to 0.01% |
| Se | 0.0002 to 0.002% |

5. Fitting according to one of the claims 1 and 2, characterized in that the glazings comprise a coloured glass sheet, whose composition contains as colouring agents:
| | |
|---|---|
| Fe₂O₃ (total iron) | 1 to 1.8% |
| CoO | 0.005 to 0.02% |
| Se | 0.0005 to 0.0025% |

6. Fitting according to one of the claims 1 and 2, characterized in that the glazings comprise a coloured glass sheet, whose composition contains as colouring agents:
| | |
|---|---|
| Fe₂O₃ (total iron) | 0.8 to 1.8% |
| CoO | 0.001 to 0.01% |

7. Fitting according to one of the claims 1 and 2, characterized in that the glazings comprise a coloured glass sheet, whose composition contains as colouring agents:
| | |
|---|---|
| Fe₂O₃ (total iron) | 1.3 to 2.5% |
| CoO | 0.005 to 0.015% |

8. Fitting according to one of the preceding claims, characterized in that the glazings comprise a coloured glass sheet, whose thickness is between 2 and 8 millimetres.

9. Fitting according to any one of the preceding claims, characterized in that the glazings forming the rear side windows have, for a thickness of 3.85 mm, a global transmission factor under illuminant A between 30 and 60%, the glazing constituting the rear window havng, for the same thickness, a global transmission factor under illuminant A between 20 and 45%.

## Patentansprüche

1. Satz von Verglasungen, die in ein Kraftfahrzeug eingebaut sind, welcher eine Frontscheibe, vordere und hintere Seitenscheiben und eine Heckscheibe umfasst, **dadurch gekennzeichnet, dass** die hinteren Seitenscheiben und die Heckscheibe aus Verglasungen bestehen, die bei festgelegter Dicke unterschiedliche Grade der Gesamtlichttransmission für Lichtart A aufweisen, wobei die Verglasungen eine Farbglasscheibe enthalten, deren Zusammensetzung folgende Bestandteile innerhalb nachstehender, in Gewichtsprozenten angegebener Grenzwerte:
| | |
|---|---|
| SiO₂ | 64 bis 75 % |
| Al₂O₃ | 0 bis 5 % |
| B₂O₃ | 0 bis 5 % |
| CaO | 5 bis 15 % |
| MgO | 0 bis 5 % |
| Na₂O | 10 bis 18 % |
| K₂O | 0 bis 5 % |
und als Farbmittel:
| | |
|---|---|
| Fe₂O₃ (Gesamteisen) | 0,45 bis 2,5 % |
| CoO | 0,001 bis 0,02 % |
| Cr₂O₃ | 0 bis 0,1 % |
| Se | 0 bis 0,0025 % |
umfasst, wobei diese Glaszusammensetzung einen Faktor der Gesamtenergieübertragung (T_{E}) besitzt, der kleiner als der Lichttransmissionsgrad (T_{LA}) für die Lichtart A ist, wobei der Faktor T_{E} 10 bis 48 % und der Lichttransmissionsgrad T_{LA} 20 bis 60 % bei einer Dicke von 3,85 Millimetern beträgt und der Satz ausgeschlossen ist, dessen hintere Seitenscheiben und Heckscheibe aus Verglasungen bestehen, die eine Farbglasscheibe enthalten, deren Zusammensetzung folgende Bestandteile innerhalb nachstehender, in Gewichtsprozenten angegebener Grenzwerte umfasst:
| | |
|---|---|
| SiO₂ | 64 bis 75 % |
| Al₂O₃ | 0 bis 5 % |
| B₂O₃ | 0 bis 5 % |
| CaO | 5 bis 15 % |
| MgO | 0 bis 5 % |
| Na₂O | 10 bis 18 % |
| K₂O | 0 bis 5 % |
| Fe₂O₃ (Gesamteisen) | 0,5 bis 1,5 % |
| CoO | 0,003 bis 0,015 % |
| Cr₂O₃ | 0,025 bis 0,09 % |
| Se | 0 bis 0,0025 % |

2. Satz nach Anspruch 1, **dadurch gekennzeichnet, dass** die Verglasungen eine Farbglasscheibe enthalten, deren Zusammensetzung einen FeO-Gehalt umfasst, der zwischen 16 und 55 % des als Fe₂O₃ ausgedrückten Gesamteisengehalts ausmacht.

3. Satz nach Anspruch 2, **dadurch gekennzeichnet, dass** die Verglasungen eine Farbglasscheibe enthalten, deren Zusammensetzung einen FeO-Gehalt umfasst, der zwischen 20 und 40 % des als Fe₂O₃ ausgedrückten Gesamteisengehalts ausmacht.

4. Satz nach Anspruch 1 oder 2, **dadurch gekennzeichnet, dass** die Verglasungen eine Farbglasscheibe enthalten, deren Zusammensetzung als Farbmittel
| | |
|---|---|
| Fe₂O₃ (Gesamteisen) | 0,45 bis 1 %, |
| CoO | 0,001 bis 0,01 %, |
| Se | 0,0002 bis 0,002 % |
umfasst.

5. Satz nach Anspruch 1 oder 2, **dadurch gekennzeichnet, dass** die Verglasungen eine Farbglasscheibe enthalten, deren Zusammensetzung als Farbmittel
| | |
|---|---|
| Fe₂O₃ (Gesamteisen) | 1 bis 1,8 %, |
| CoO | 0,005 bis 0,02 %, |
| Se | 0,0005 bis 0,0025 % |
umfasst.

6. Satz nach Anspruch 1 oder 2, **dadurch gekennzeichnet, dass** die Verglasungen eine Farbglasscheibe enthalten, deren Zusammensetzung als Farbmittel
| | |
|---|---|
| Fe₂O₃ (Gesamteisen) | 0,8 bis 1,8 %, |
| CoO | 0,001 bis 0,01 % |
umfasst.

7. Satz nach Anspruch 1 oder 2, **dadurch gekennzeichnet, dass** die Verglasungen eine Farbglasscheibe enthalten, deren Zusammensetzung als Farbmittel
| | |
|---|---|
| Fe₂O₃ (Gesamteisen) | 1,3 bis 2,5 %, |
| CoO | 0,005 bis 0,015 % |
umfasst.

8. Satz nach einem der vorhergehenden Ansprüche, **dadurch gekennzeichnet, dass** die Verglasungen eine Farbglasscheibe enthalten, deren Dicke zwischen 2 und 8 Millimeter beträgt.

9. Satz nach einem der vorhergehenden Ansprüche, **dadurch gekennzeichnet, dass** die Verglasungen, welche die hinteren Seitenscheiben bilden, bei einer Dicke von 3,85 mm einen Gesamttransmissionsgrad für Lichtart A von 30 bis 60 % aufweisen und die Verglasung, welche die Heckscheibe bildet, bei derselben Dicke einen Gesamttransmissionsgrad für Lichtart A von 20 bis 45 % aufweist.
